# EUROPEAN PATENT APPLICATION

(11) **EP 4 455 094 A1**
(43) Date of publication of application: **30.10.2024**
(21) Application number: 24170905.4
(22) Date of filing: 17.04.2024
(51) Int. Cl.: C01G 53/00, H01M 4/525

(54) **CATHODE ACTIVE MATERIAL FOR LITHIUM SECONDARY BATTERY AND LITHIUM SECONDARY BATTERY INCLUDING THE SAME**

(30) Priority: 20.04.2023 KR 20230051996
(71) Applicant: SK On Co., Ltd., Seoul 03161 (KR)
(72) Inventor: SON, Byoung Ki, 34124 Daejeon (KR); NOH, Mi Jung, 34124 Daejeon (KR); CHOI, Jae Ho, 34124 Daejeon (KR); HAN, Kook Hyun, 34124 Daejeon (KR)
(74) Representative: Stolmár & Partner Patentanwälte PartG mbB

(57) **Abstract**

A cathode active material for a lithium secondary battery includes a first active material particle having a secondary particle structure that include first primary particles that are agglomerated or aggregated, and a second active material particle having a secondary particle structure that includes second primary particles that are agglomerated or aggregated. A particle diameter of the second active material particle is smaller than a particle diameter of the first active material particle, and an aspect ratio of the second primary particles is smaller than an aspect ratio of the first primary particles. Each of the first active material particle and the second active material particle includes a lithium-nickel-cobalt-based metal oxide, and a mass ratio of cobalt to active metals excluding lithium, nickel and cobalt in the lithium-nickel-cobalt-based metal oxide is in a range from 0.7 to 2.0.

## Description

### TECHNICAL FIELD

The disclosed technology relates to a cathode active material for a lithium secondary battery and a lithium secondary battery including the same.

### BACKGROUND

Secondary batteries can be charged and discharged repeatedly, and with the developments of the information and communication industries, they are widely used as a power source of mobile electronic devices such as camcorders, mobile phones, and laptop computers. Recently, battery packs including the secondary batteries are being developed and applied as a power source of eco-friendly vehicles such as electric vehicles.

Examples of the secondary battery includes a lithium secondary battery, a nickelcadmium battery, a nickel-hydrogen battery, etc. The lithium secondary battery is being actively developed and applied due to high operational voltage and energy density per unit weight, a high charging rate, a compact dimension, etc.

### SUMMARY

The disclosed technology can be implemented in some embodiments to provide a cathode active material for lithium secondary batteries that exhibits improved high-temperature stability and charging/discharging properties.

In an aspect of the disclosed technology, there is provided a lithium secondary battery including the cathode active material.

A cathode active material for a lithium secondary battery includes a first active material particle having a structure of a secondary particle that includes first primary particles that are agglomerated or aggregated, and a second active material particle having a secondary particle structure that includes second primary particles that are agglomerated or aggregated, wherein a particle diameter of the second active material particle is smaller than a particle diameter of the first active material particle, and an aspect ratio of the second primary particles is smaller than an aspect ratio of the first primary particles. In one example, each of the first active material particle and the second active material particle includes a lithium-nickel-cobalt-based metal oxide, and a mass ratio of cobalt to an active metal excluding lithium, nickel and cobalt in the lithium-nickel-cobalt-based metal oxide is in a range from 0.7 to 2.0. In one example, the active metal includes at least one element from Mn, Al, Ti, V, Zr, Nb, Sb and Ta.

In some embodiments, the aspect ratio of the first primary particles may be in a range from 2 to 10.

In some embodiments, the aspect ratio of the first primary particles may be in a range from 2.5 to 9.5.

In some embodiments, the aspect ratio of the second primary particles may be in a range from 1 to 1.9.

In some embodiments, the aspect ratio of the second primary particles may be in a range from 1 to 1.8.

In some embodiments, the active metal may include Mn.

In some embodiments, a molar ratio of Co relative to Mn in the lithium-nickel-cobalt-based metal oxide may be in a range from 0.6 to 1.5.

In some embodiments, a mole fraction of nickel relative to total moles of metals except for lithium in the lithium-nickel-cobalt-based metal oxide may be 0.8 or more.

In some embodiments, the lithium-nickel-cobalt-based metal oxide may include a layered structure or a chemical structure represented by Chemical Formula 1.

[Chemical Formula 1] LiₐNiₓCo_{y}M1_{z}M2_{w}O₂

In Chemical Formula 1, 0.95≤a≤1.2, 0.8≤x≤0.98, 0<y≤0.3, 0<z≤0.3, 0≤w≤0.1, M1 represents the active metal, and M2 represents a heterogeneous element different from Ni, Co and M1.

In some embodiments, in Chemica Formula 1, M2 may include at least one element from B, Ca, W, Mg, Na, Y, Hf, Ba, Ra, Sr, Sn, Ru, Fe, Zn, Cr, Ga, V and Bi.

In some embodiments, a difference between particle diameters of the first active material particle and the second active material particle may be 10 µm or more.

In some embodiments, the particle diameter of the first active material particle may be in a range from 11 µm to 25 µm.

In some embodiments, the particle diameter of the second active material particle may be in a range from 0.5 µm to 5 µm.

In some embodiments of the disclosed technology, a lithium secondary battery includes a cathode including the cathode active material for a lithium secondary battery discussed above, and an anode facing the cathode.

A cathode for a lithium secondary battery based on some embodiments of the disclosed technology may include a first active material particle corresponding to a large diameter particle and a second active material particle corresponding to a small diameter particle. An aspect ratio of primary particles included in the second active material particle may be smaller than an aspect ratio of primary particles included in the first active material particle, so that thermal stability and chemical stability may be improved by the small diameter particles.

In some example embodiments, the large diameter particle and/or the small diameter particle may include a lithium-nickel metal oxide in which a cobalt content is adjusted to a desirable range. In the above range, an aspect ratio of the large diameter particle may be increased, so that both life-span properties and thermal stability of the active material may be improved.

The cathode active material and the lithium secondary battery based on some embodiments of the disclosed technology may be widely applied in green technology fields such as an electric vehicle, a battery charging station, a solar power generation, a wind power generation, etc., using a battery, etc. The cathode active material and the lithium secondary battery based on some embodiments of the disclosed technology may be used for eco-friendly electric vehicles and hybrid vehicles to prevent a climate change by suppressing air pollution and greenhouse gas emissions, etc.

### BRIEF DESCRIPTION OF THE DRAWINGS

FIG. 1 is a schematic plan view illustrating a lithium secondary battery based on some example embodiments of the disclosed technology.
FIG. 2 is a schematic cross-sectional view illustrating a lithium secondary battery based on some example embodiments of the disclosed technology.
FIGS. 3A and 3B are scanning electron microscope (SEM) images of a first active material particle and a second active material particle of Example 6, respectively.
FIGS. 4A and 4B are SEM images of a first active material particle and a second active material particle of Comparative Example 3, respectively.
FIG. 5 is an SEM image of a cross-section of a cathode active material layer according to Example 6.
FIG. 6 is an SEM image of a cross-section of a cathode active material layer according to Comparative Example 3.

### DETAILED DESCRIPTION

Section headings are used in the present document only for ease of understanding and do not limit scope of the embodiments to the section in which they are described.

Lithium nickel manganese cobalt oxide (NCM)-based active materials containing nickel, cobalt and manganese are used as cathode active materials for lithium secondary batteries. For example, as the application range of the lithium secondary batteries is expanding to large devices such as electric vehicles, high-nickel (High-Ni)-based lithium oxides are being developed as a cathode active material to achieve high capacity of lithium secondary batteries. However, as the content of nickel in the cathode active materials increases, the stability of the chemical structure and the crystal structure of active material particles may be deteriorated.

For example, a cation mixing phenomenon that nickel cations are transferred to lithium sites may occur, which may reduce the stability and lifespan characteristics of lithium secondary batteries during repeated charging/discharging operations.

The disclosed technology can be implemented in some embodiments to provide cathode active materials for lithium secondary batteries that include active material particles with a secondary particle structure and lithium secondary batteries including the cathode active materials. The disclosed technology can be implemented in some embodiments to provide cathode active materials for lithium secondary batteries including nickel and secondary particles. In some example embodiments of the disclosed technology, lithium secondary batteries including the cathode active materials can exhibit improved capacity, efficiency and stability.

Reference will now be made in detail to embodiments of the disclosed technology, examples of which are illustrated in the accompanying drawings. However, the following description is merely an example and are not intended to limit the disclosed technology to a specific implementation.

### <Cathode Active Material for Lithium Secondary Battery>

A cathode active material for a lithium secondary battery (hereinafter referred to as "cathode active material") based on some embodiments of the disclosed technology may include a first active material particle and a second active material particle having different particle diameters.

The first active material particle may be included as a large diameter particle having a particle diameter greater than a particle diameter of the second active material particle. The second active material particle may be included as a small diameter particle.

In some example embodiments, a difference between the particle diameter of the first active material particle and the particle diameter of the second active material particle may be 10 µm or more. In some embodiments, a difference between the particle diameter of the first active material particle and the particle diameter of the second active material particle may be in a range from 10 µm to 20 µm.

For example, the particle diameter of the first active material particle may be in a range from 11 µm to 25 µm. The particle diameter of the second active material particle may be in a range from 0.5 µm to 5 µm.

The term "particle diameter" as used herein may refer to an average particle diameter (D50) of a plurality of particles. D50 may be an average particle diameter obtained from a volume cumulative distribution of the active material particles.

In some embodiments, the particle diameters of the first active material particle and the second active material particle may each be measured from an SEM image of a particle cross-section.

In some embodiments, a difference of the particle sizes may be calculated from a scanning electron microscope (SEM) image of a cross-section of a cathode active material layer formed using the cathode active material above. If the difference of the particle sizes between randomly selected large diameter particle and small diameter particle in the cross-sectional image is 10 µm or more, the particles may correspond to the first active material particle and the second active material particle.

The "particle diameter" measured from the SEM image may refer to the largest linear length among linear lengths measured from the cross-section of the particle.

Each of the first active material particle and the second active material particle may have a structure of a secondary particle formed by an aggregation of primary particles. The primary particles included in the secondary particle may have different particle sizes that may form a particle size distribution. In some implementations, the term "secondary particle" can be used to indicate an aggregate including smaller primary particles therein.

For example, the first active material particle may have a secondary particle shape including a plurality of first primary particles, and the second active material particles may have a secondary particle shape including a plurality of second primary particles. In some implementations, the term "secondary particle shape" can be used to indicate a shape of a secondary particle, such as a spherically shaped particle. For example, the first active material particle may include a first secondary particle including the first primary particles agglomerated or aggregated therein, and the second active material particle may include a second secondary particle including the second primary particles agglomerated or aggregated therein.

The first active material particles may include 20 or more, 30 or more, 50 or more, 60 or more, 70 or more, 80 or more, 90 or more, or 100 or more of the first primary particles. The second active material particles may include 20 or more, 30 or more, or 40 or more of the second primary particles.

In some embodiments, the number of the first primary particles included in the first active material particle may be greater than the number of the second primary particles included in the second active material particle.

In an embodiment, the number of the second primary particles included in the second active material particle may be 100 or lessor 80 or less.

In some embodiments of the disclosed technology, an aspect ratio of the first primary particle included in the first active material particle may be greater than an aspect ratio of the second primary particle of the second active material particle.

In some example embodiments, an aspect ratio of the first primary particle may be in a range from 2 to 10. In some embodiments, the aspect ratio of the first primary particle may be in a range from 2.5 to 9.5. In an embodiment, the aspect ratio of the first primary particle may be in a range from of 2.5 to 7.

An aspect ratio of the second primary particle may be in a range from 1 to 1.9. In an embodiment, the aspect ratio of the second primary particle may be in a range from 1 to 1.8. In an embodiment, the aspect ratio of the second primary particle may be in a range from 1.1 to 1.7, from 1.1 to 1.6, or from 1.1 to 1.5.

The term "aspect ratio" used herein may refer to a ratio of a major axis length to a minor axis length of a particle in, e.g., a bounding ellipse model. The major axis length may be the largest of linear lengths measured in a cross-section of a primary particle, and the minor axis length may refer to the smallest of the linear lengths measured in the cross-section of the primary particle.

In some example embodiments, the aspect ratio of the first primary particle and the second primary particle may be an average value of aspect ratios of five primary particles selected from an SEM cross-sectional image of the particle.

In some embodiments, when a radius of the second active material particle is R, five of the first primary particles may be selected in a region within 0.5R in a radial direction from a surface of the first active material particle toward a center of the particle to calculate the aspect ratio.

For example, the aspect ratio may be calculated by dividing ae sum of the major axis lengths of the selected five particles by the sum of the minor axis lengths.

Each of the first active material particle and the second active material particle may include a lithium-nickel-cobalt-based metal oxide.

In example embodiments, a mole fraction of nickel relative to total moles of metals excluding lithium included in the lithium-nickel-cobalt-based metal oxide may be 0.8 or more. Preferably, the mole fraction of nickel may be 0.88 or more, 0.89 or more, 0.90 or more, or 0.91 or more.

The above-described high-nickel (high-Ni) composition may be employed, so that capacity characteristics generated from the cathode active material may be increased. Thus, the cathode active material may be efficiently applied to a high-capacity secondary battery such as a vehicle battery pack.

However, as a content of nickel content of the cathode active material increases, capacity retention characteristics and thermal stability of the secondary battery may be deteriorated. Thus, in some embodiments, the mole fraction of nickel may be adjusted to be 0.98 or less, 0.97 or less, or 0.96 or less.

In some embodiments, a mole fraction of cobalt (Co) relative to total moles of metals except for lithium included in the lithium-nickel-cobalt-based metal oxide may be greater than 0 and 0.3 or less.

In an embodiment, the mole fraction of cobalt may be in a range from 0.01 to 0.1, from 0.02 to 0.1, or from 0.03 to 0.1.

The lithium-nickel-cobalt-based metal oxide may further include an active metal in addition to nickel and cobalt. For example, the active metal may include at least one of Al, Ti, V, Mn, Zr, Nb, Sb and Ta. In an embodiment, the active metal may include Mn.

In some embodiments, a mass ratio of cobalt to the active metal in the lithium-nickel-cobalt-based metal oxide may be in a range from 0.7 to 2.0. In an embodiment, the mass ratio of cobalt to the active metal may be in a range from 0.7 to 1.5, from 0.7 to 1.45, or from 0.9 to 1.45.

In example embodiments, a molar ratio of cobalt to the active metal in the lithium-nickel-cobalt-based metal oxide may be in a range from 0.6 to 1.5. For example, a molar ratio (Co/Mn) of cobalt to manganese may be in a range from 0.6 to 1.5.

In some embodiments, the molar ratio of cobalt to the active metal may be in a range from 0.7 to 1.5. In an embodiment, the molar ratio of cobalt to the active metal may be in a range from 0.8 to 1.4.

For example, the lithium-nickel-cobalt-based metal oxide may include a layered structure or a chemical structure represented by Chemical Formula 1.

[Chemical Formula 1] LiₐNiₓCo_{y}M1_{z}M2_{w}O₂

In Chemical Formula 1, 0.95≤a≤1.2, 0.8≤x≤0.98, 0<y≤0.3, 0<z≤0.3, 0≤w≤0.1. M1 may include at least one element from Mn, Al, Ti, V, Zr, Nb, Sb and Ta. M2 may be a heterogeneous element different from Ni, Co and M1. For example, M2 may include at least one element from B, Ca, W, Mg, Na, Y, Hf, Ba, Sr, Sn, Ru, Fe, Zn, Cr, Ga, V and Bi.

As described above, in an embodiment, M1 may include Mn.

In an embodiment, 0<y≤0.1, 0<z≤0.3. For example, 0<y≤0.1, 0<z≤0.2.

In an embodiment, a sum of x, y and z in Chemical Formula 1 may be substantially 1.

In some embodiments, the cathode active material above or the lithium-nickel-cobalt-based metal oxide above may further include an additional doping or coating element. For example, the doping or coating element may exist on a surface of the lithium-transition metal oxide particle, or may penetrate through the surface of the lithium-transition metal oxide particle to be included in a bonding structure represented by Chemical Formula 1.

In an embodiment, an auxiliary element for enhancing the chemical stability of the cathode active material or the layered structure/crystal structure in addition to the active metal may be further included. The auxiliary element may be incorporated into the layered structure/crystal structure to form a bond, and this chemical structure is to be understood within the range of the chemical structure represented by Chemical Formula 1.

As described above, the first active material particle may include first primary particles having a relatively large aspect ratio. The first primary particles may be arranged and aggregated radially from a particle center. The first primary particles of the radial high aspect ratio may be aggregated in the first active material particle having a relatively large particle size, so that lithium ion transfer characteristics of lithium ions may be improved and capacity characteristics of the cathode active material may be improved.

For example, if the aspect ratio of the primary particles decreases in the large diameter secondary particle, contraction/expansion in a c-axis direction may increase during repeated charging/discharging. Thus, as discussed above, by increasing the aspect ratio of the first primary particles to 2 or more, the crystal structure stability in the particle may be maintained or enhanced. Additionally, by adjusting the aspect ratio of the first primary particles to 10 or less, it is possible to prevent an increase in the specific surface area and a decrease in the particle strength due to an excessive increase in the aspect ratio.

For example, in the small diameter secondary particle, active material properties may be easily deteriorated due to a side reaction between an electrolyte and the surface of the active material. As discussed above, the aspect ratio of the second primary particles may be adjusted in a range from 1 to 1.9 to reduce a specific surface area of the particle. Thus, the side reaction with the electrolyte may be reduced or suppressed.

Additionally, the aspect ratio in the second active material particle serving as the small diameter particle may be reduced to increase a particle strength. The second active material particles may fill voids between the first active material particles to enhance overall mechanical strength of the cathode active material layer.

As described above, the mass ratio of Co/M1 in structure of the lithium-nickel-cobalt-based metal oxide included in the first active material particle and the second active material particle may be adjusted in a range from 0.7 to 2.0.

For example, if the Co/M1 ratio is excessively reduced, a conductivity of the cathode active material may be excessively lowered to degrade a power of the secondary battery, and the layered structure may be collapsed and thermal stability may be degraded due to the reduction of Co.

If the Co/M1 ratio is excessively increased, an amount of relatively high cost Co may increase to degrade an overall economic aspect of the secondary battery. Additionally, a content of M1 (e.g., Mn) may not be sufficient, and instability due to the introduction of a high-nickel (High-Ni) composition may not be sufficiently reduced/suppressed.

Therefore, the Co/M1 ratio may be controlled within the above range, so that the collapse of the layered structure of the lithium-nickel-cobalt-based metal oxide may be effectively prevented. Further, cracks of the active material particles may be prevented by the combination of the above-described first and second active material particles.

In some example embodiments, the cathode active material may include a plurality of the first active material particles and a plurality of the second active material particles.

For example, a sum of the weights of the first active material particles and the second active material particles may be 50 wt% or more, 70 wt% or more, 80 wt% or more, 90 wt% or more, or 95 wt% or more based on a total weight of the cathode active material.

In an embodiment, the cathode active material may substantially consist of the first active material particles and the second active material particles.

In some example embodiments, a weight ratio of the first active material particles and the second active material particles may be in a range from 3:7 to 7:3, from 4:6 to 6:4, or from 4.5:5.5 to 5.5:4.5.

Within the above range, a stability and a cathode activity may be effectively balanced and improved by the construction of the structure and aspect ratio of the above-described first and second active material particles.

Hereinafter, a method of preparing a cathode active material according to the embodiments of the disclosed technology is provided.

In some example embodiments, an active material metal source may be prepared or formed. The active material metal source may include a nickel source and a cobalt source. For example, a manganese source may be used together as an M1 source.

Examples of the nickel source may include nickel sulfate (NiSO₄), nickel hydroxide (Ni(OH)₂), nickel nitrate (Ni(NO₃)₂), nickel acetate (Ni(CH₃CO₂)₂⁾, a hydrate thereof, etc. Examples of the manganese source may include manganese sulfate (MnSO₄), manganese hydroxide (Mn(OH)₂), manganese nitrate (Mn(NO₃)₂), manganese acetate (Mn(CH₃CO₂)₂), a hydrate thereof, etc. Examples of the cobalt source may include cobalt sulfate (CoSO₄), cobalt hydroxide (Co(OH)₂), cobalt nitrate (Co(NO₃)₂), cobalt carbonate (CoCO3), a hydrate thereof, etc.

In an embodiment, nickel sulfate, manganese sulfate, and cobalt sulfate may be used as the nickel source, the manganese source and the cobalt source, respectively.

In an embodiment, an active material precursor may be obtained by mixing the above-described active material metal sources and reacting them through, e.g., a coprecipitation method. For example, the active material precursor may be prepared in the form of a nickel-manganese-cobalt hydroxide.

A precipitating agent and/or a chelating agent may be used to promote the coprecipitation reaction. The precipitating agent may include an alkaline compound such as sodium hydroxide (NaOH), sodium carbonate (Na₂CO₃), etc. The chelating agent may include, e.g., ammonia water, ammonium carbonate, etc.

The active material precursor may be mixed with a lithium source and reacted through a heat treatment (firing) to prepare particles of a lithium-nickel-cobalt-based metal oxide. For example, a temperature of the heat treatment may be adjusted in a range from about 600°C to 1000°C.

The lithium source may include, e.g., lithium carbonate (Li₂CO₃), lithium nitrate (LiNO₃), lithium acetate (CH₃COOLi), lithium oxide (Li₂O), lithium hydroxide (LiOH), etc. These may be used alone or in a combination of two or more therefrom. In an embodiment, lithium hydroxide may be used as the lithium source.

In some embodiments, sources (e.g., a hydroxide or an oxide) containing the above-described M2 element or the auxiliary element may also be used.

In some embodiments, impurities such as LiOH and Li₂CO₃ may remain on the surface of the particle of the lithium-nickel-cobalt-based metal oxide. The impurities may be removed by washing with an aqueous or organic solvent.

In an embodiment, after the washing, a post-firing process may be further performed. The post-firing process may be performed at a temperature of, e.g., about 250°C to 500°C.

In some example embodiments, particle diameters and aspect ratios of the first active material particle and the second active material particle may be controlled by adjusting a firing temperature and a firing time in the firing process.

In an embodiment, the firing process for forming the first active material particle (e.g., large-diameter particles) may increase the aspect ratio of the first primary particles and the particle diameter of the secondary particle by lowering the firing temperature and increasing the firing time. For example, the firing temperature for forming the first active material particle may be adjusted in a range from 650°C to 750°C, and the firing time may be adjusted in a range from 20 hours to 32 hours.

In an embodiment, the firing process for forming the second active material particle (the small diameter particle), may reduce the aspect ratio of the second primary particles and the particle diameter of the secondary particle by increasing the firing temperature and reducing the firing time. For example, the firing temperature for forming the second active material particles above may be adjusted in a range from 680°C to 850°C, and the firing time may be adjusted in a range from 16 hours to 28 hours.

### <Lithium Secondary Battery>

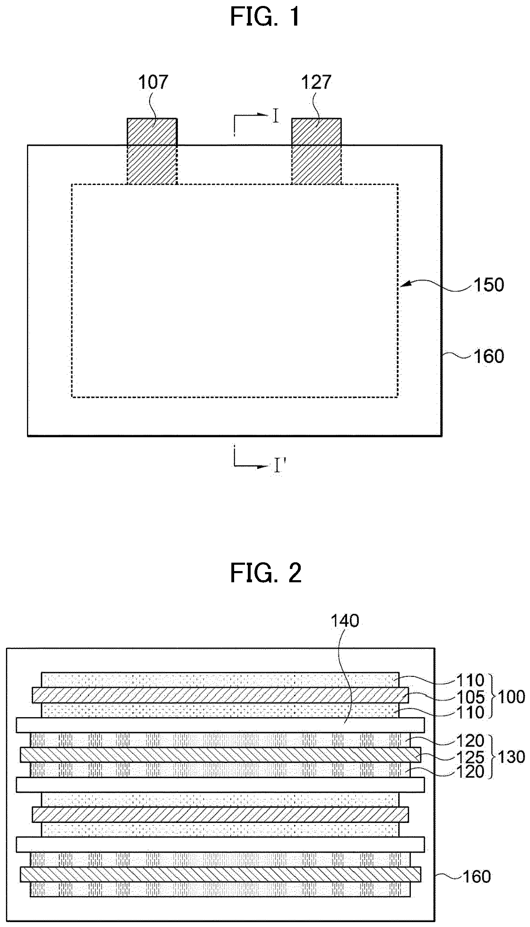

FIGS. 1 and 2 are a schematic plan view and a schematic cross-sectional view, respectively, illustrating a lithium secondary battery in accordance with example embodiments. For example, FIG. 2 is a cross-sectional view taken along a line I-I' of FIG. 1 in a thickness direction.

Hereinafter, a cathode for a lithium secondary battery (hereinafter, abbreviated as a cathode) and a lithium secondary battery including the same will be described with reference to FIGS. 1 and 2.

Referring to FIGS. 1 and 2, the lithium secondary battery may include an electrode assembly including a cathode 100, an anode 130, and a separator 140 interposed between the cathode and the anode. The electrode assembly may be accommodated together with an electrolyte solution in a case 160 to be impregnated therein.

The cathode 100 may include a cathode current collector 105 and a cathode active material layer 110 formed on at least one surface of the cathode current collector 105. The cathode active material layer 110 may include a cathode active material including first and second active material particles based on some embodiments of the disclosed technology as described above.

The cathode active material may be mixed and stirred with a binder, a conductive material, and/or a dispersant in a solvent to prepare a slurry. The slurry may be coated on the cathode current collector 105, and then dried and pressed to prepare the cathode 100.

The cathode current collector 105 may include, e.g., stainless steel, nickel, aluminum, titanium, copper, or an alloy thereof, and may include, e.g., aluminum or an aluminum alloy.

The binder may include an organic based binder such as polyvinylidenefluoride (PVDF), a polyvinylidene fluoride-hexafluoropropylene copolymer (PVDF-co-HFP), , polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

The anode 130 may include an anode current collector 125 and an anode active material layer 120 including an anode active material on the anode current collector 125.

In some example embodiments, the anode active material may include a carbon-based material such as a crystalline carbon, an amorphous carbon, a carbon complex, a carbon fiber, etc.

For example, the amorphous carbon may include a hard carbon, cokes, a mesocarbon microbead (MCMB), a mesophase pitch-based carbon fiber (MPCF), etc. For example, the crystalline carbon may include natural graphite, artificial graphite, graphitized cokes, graphitized MCMB, graphitized MPCF, etc.

In an embodiment, natural graphite and/or artificial graphite may be used as the carbon-based active material.

In some embodiments, the anode active material above may further include a silicon-based active material. For example, the silicon-based active material may include Si, SiOx (0<x<2), a silicon-carbon composite, a metal-doped silicate, etc.

The silicon-based active material may provide a much greater capacity than, e.g., the carbon-based material. However, the silicon-based active material may excessively expand in a high temperature environment or during repeated charging/discharging to deteriorate a battery stability.

Accordingly, the carbon-based active material may be used together with the silicon-based active material as the anode active material.

To prevent instability caused by the battery expansion, an amount of the carbon-based active material (e.g., the graphite-based active material) may be greater than an amount of the silicon-based active material in the total weight of the anode active material.

In some example embodiments, a weight ratio of silicon elements to a total weight of carbon elements (C) and the silicon elements (Si) included in the anode active material above may be in a range from 1% to 10%. Within the above range, a high capacity/high stability structure may be provided from the anode together with the above-described high capacity/high stability design of the cathode.

In some embodiments, the weight ratio of the silicon element in the anode active material may be in a range from 1% to 9%, from 1% to 8%, from 1% to 7%, from 1% to 6%, or from 1% to 5%.

For example, the anode active material may be mixed with a binder, a conductive material, a thickener, etc., in a solvent to form a slurry. The slurry may be coated on at least one side of the anode current collector 125, and then dried and pressed to form the anode 130.

The binder and the conductive material substantially the same as or similar to those used in the cathode active material layer 110 may also be used. In some embodiments, the binder for forming the anode 130 may include an aqueous binder such as styrene-butadiene rubber (SBR) for a compatibility with, e.g., the carbon-based active material, and carboxymethyl cellulose (CMC) may also be used as a thickener.

The separator 140 may be interposed between the cathode 100 and the anode 130. The separator 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separator 140 may also include a non-woven fabric formed from a glass fiber with a high melting point, a polyethylene terephthalate fiber, etc.

In some embodiments, an area (e.g., a contact area with the separator 140) and/or a volume of the anode 130 may be greater than that of the cathode 100. Accordingly, transfer of lithium ions generated from the cathode 100 to the anode 130 may be facilitated without being precipitated.

In example embodiments, an electrode cell may be defined by the cathode 100, the anode 130 and the separator 140, and a plurality of the electrode cells may be repeatedly arranged to form an electrode assembly 150 having, e.g., a jelly-roll shape. In some embodiments, the electrode assembly 150 may be fabricated by winding, stacking or folding of the separation layer 140.

The electrode assembly 150 may be accommodated within a case 160 together with an electrolyte to define a lithium secondary battery. In example embodiments, a non-aqueous electrolyte may be used as the electrolyte.

The non-aqueous electrolyte may include a lithium salt and an organic solvent. The lithium salt may be represented by Li⁺X⁻ , and an anion of the lithium salt X' may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

As illustrated in FIG. 1, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a prismatic shape, a pouch shape or a coin shape.

Hereinafter, experimental examples below describe some embodiments of the disclosed technology.

### Examples and Comparative Examples

### Example 1

### Fabrication of cathode

NiSO₄, CoSO₄ and MnSO₄ were mixed in a composition as shown in Table 1 using distilled water from which dissolved oxygen was removed by bubbling with N₂ for 24 hours. The solution was added to a reactor at a temperature of 60°C, and NaOH and NH₃H₂O were used as a precipitating agent and a chelating agent, respectively, to perform a coprecipitation reaction for 48 hours. Products from the coprecipitation reaction was separated by a centrifuge to remove impurities, and the precipitate was washed with distilled water to prepare an active material precursor.

LiOH as a lithium source was mixed with the active material precursor in substantially corresponding moles, and then the mixture was fired at 750°C for 30 hours to obtain first active material particles (large diameter particles, particle diameter: 12 µm).

Second active material particles (small diameter particles, particle diameter: 2 µm) were obtained by substantially the same process as that as described above, except that the firing temperature and firing time were adjusted to 770°C and 27 hours, respectively.

A cathode active material including the first active material particles and the second active material particles mixed in a weight ratio of 1:1, Denka Black as a conductive material, and PVDF as a binder were mixed in a weight ratio of 96:1:2, respectively to prepare a cathode mixture. The cathode mixture was coated on an aluminum current collector, and then dried and pressed to prepare a cathode having an electrode density of 3.6 g/cc.

### Fabrication of anode and lithium secondary battery

A graphite-based anode active material and a silicon-based anode active material (SiOx,0<x<2) was mixed so that a weight ratio of silicon and carbon analyzed by an ICP became 1:99 to prepare an anode active material.

The anode active material, a flake type conductive material KS6 as a conductive material, and a styrene-butadiene rubber (SBR) as a binder were mixed in a weight ratio of 94:3:3 to prepare an anode slurry. The anode slurry was coated, dried and pressed on a copper substrate to prepare an anode.

The cathodes and anodes prepared as described above were notches by a predetermined sized, and stacked with a separator (polyethylene, thickness: 25 µm) interposed therebetween to form an electrode cell. Tab portions of the cathodes were welded and tab portions of the anodes were welded. The prepared assemble of the cathode/separator/anode was placed in a pouch, and three surfaces were sealed except for an electrolyte injection side. The tab portions were positioned in the sealing portion. An electrolyte was injected through the electrolyte injection side, the electrolyte injection side was also sealed, and then impregnation was performed for 12 hours or more.

A 1M LiPF6 using a mixed solvent of EC/EMC/DEC (25/45/30; volume ratio) was used as the electrolyte. Further, 1 wt% of vinylene carbonate (VC), 0.5 wt% of 1,3-propensultone (PRS) and 0.5 wt% of lithium bis(oxalato)borate (LiBOB) were added.

Thereafter, pre-charging was performed with a current (SA) corresponding to 0.25C for 36 minutes. After 1 hour, degassing and aging were performed for 24 hours or more, and formation charging and discharging were performed (charging conditions: CC-CV 0.2C 4.2V 0.05C CUT-OFF, discharging conditions: CC 0.2C 2.5V CUT-OFF).

### Examples 2 to 10 and Comparative Examples 1 to 4

As shown in Tables 1 and 2, cathode active materials and lithium secondary batteries including the first active material particles and the second active material particles were prepared by the same method as that in Example 1, except that the ratio of active material metal contents, the firing temperature and the firing time were adjusted. In Table 1, Me refers to metals excluding lithium.

**[Table 1]**

| | mol ratio | | element content (ppm) | | | | | aspect ratio of primary particle (particle diameter: µm) | |
|---|---|---|---|---|---|---|---|---|---|
| | Ni/Me | Co/Me | Ni | Co | M1(Mn) | Co/M1 (molar ratio) | Co/M1 (mass ratio) | second active material particle | first active material particle |
| Example 1 | 0.80 | 0.09 | 483,624 | 53,667 | 59,185 | 0.85 | 0.91 | 1.1 (2 µm) | 2.6 (12 µm) |
| Example 2 | 0.80 | 0.09 | 482,800 | 50,500 | 48,500 | 0.97 | 1.04 | 1.2 (2.5 µm) | 4.0 (13 µm) |
| Example 3 | 0.89 | 0.05 | 550,754 | 32,898 | 43,862 | 0.70 | 0.75 | 1.1 (2.8 µm) | 22 (13 µm) |
| Example 4 | 0.89 | 0.06 | 542,728 | 34,825 | 34,763 | 0.93 | 1.00 | 1.1 (2.6 µm) | 2.8 (13.3 µm) |
| Example 5 | 0.90 | 0.06 | 560,268 | 39,087 | 30,800 | 1.18 | 1.27 | 1.5 (2.5 µm) | 3.7 (13.5 µm) |
| Example 6 | 0.91 | 0.06 | 548,036 | 37,245 | 25,786 | 1.35 | 1.44 | 1.4 (2.8 µm) | 6.9 (13.5 µm) |
| Example 7 | 0.94 | 0.03 | 553,000 | 17,500 | 21,880 | 0.75 | 0.80 | 1.5 (3.2 µm) | 6.4 (14.5 µm) |
| Example 8 | 0.95 | 0.03 | 558,000 | 17,400 | 18,720 | 0.87 | 0.93 | 1.1 (3.2 µm) | 3.2 (14.8 µm) |
| Example 9 | 0.95 | 0.03 | 549,000 | 17,200 | 14,510 | 1.10 | 1.19 | 1.7 (3.2 µm) | 9.3 (15 µm) |
| Example 10 | 0.95 | 0.03 | 529,000 | 17,400 | 14,970 | 1.08 | 1.16 | 1.2 (3.5 µm) | 3.0 (15 µm) |
| Comparative Example 1 | 0.89 | 0.03 | 550,935 | 15,175 | 60,685 | 0.23 | 0.25 | 1.1 (2 µm) | 1.4 (12 µm) |
| Comparative Example 2 | 0.90 | 0.03 | 538,021 | 20,548 | 44,089 | 0.43 | 0.47 | 2.1 (2.5 µm) | 2.2 (13 µm) |
| Comparative Example 3 | 0.90 | 0.05 | 549,512 | 33,333 | 33,866 | 0.92 | 0.98 | 22 (2.7 µm) | 1.7 (13.5 µm) |
| Comparative Example 4 | 0.90 | 0.09 | 552,571 | 58,061 | 19,815 | 2.73 | 2.93 | 1.2 (2.8 µm) | 2.4 (13.8 µm) |

**[Table 2]**

| | second active material particle (small diameter particle) | | first active material particle (large diameter particle) | |
|---|---|---|---|---|
| | firing temperature (°C) | firing time (hr) | firing temperature (°C) | firing time (hr) |
| Example 1 | 770 | 27 | 750 | 30 |
| Example 2 | 770 | 27 | 750 | 30 |
| Example 3 | 740 | 22 | 720 | 25 |
| Example 4 | 740 | 22 | 720 | 25 |
| Example 5 | 730 | 21 | 710 | 24 |
| Example 6 | 730 | 21 | 710 | 24 |
| Example 7 | 710 | 19 | 690 | 22 |
| Example 8 | 710 | 19 | 690 | 22 |
| Example 9 | 710 | 19 | 690 | 22 |
| Example 10 | 710 | 19 | 690 | 22 |
| Comparative Example 1 | 740 | 22 | 720 | 25 |
| Comparative Example 2 | 740 | 22 | 720 | 25 |
| Comparative Example 3 | 720 | 21 | 710 | 24 |
| Comparative Example 4 | 720 | 21 | 710 | 24 |

Specifically, the particle diameters and the aspect ratios of the first active material particles and the second active material particles were measured from an SEM cross-sectional image of the cathode active material prepared according to each of Examples and Comparative Examples.

The particle diameters of the secondary particles were measured by selecting the first active material particle and the second active material particle in the above-described particle diameter range from the SEM cross-sectional image. Five primary particles included in the selected particle were selected within a radius of 0.5R, and an average of aspect ratios of the selected primary particles was used as the aspect ratio of the corresponding particle.

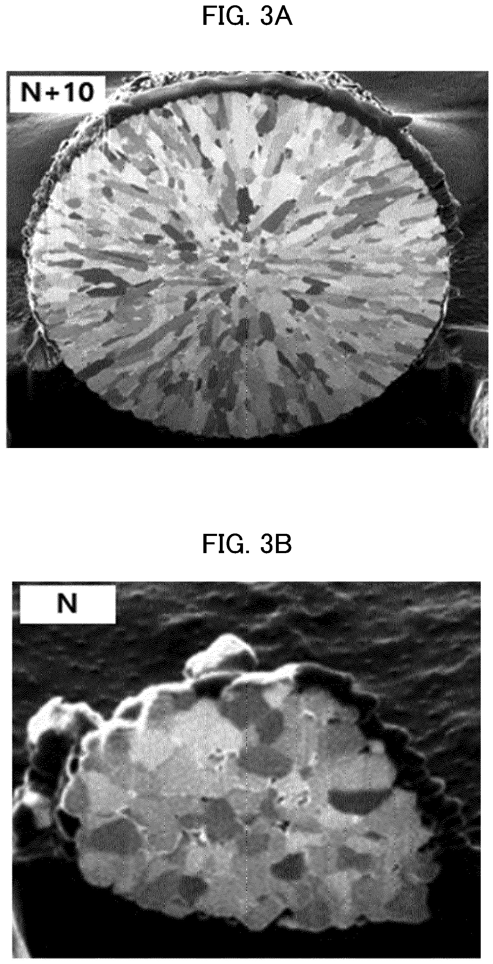

FIGS. 3A and 3B are scanning electron microscope (SEM) images of a first active material particle (designated as N+10) and a second active material particle (designated as N) of Example 6, respectively.

The aspect ratio was calculated from the five primary particles selected from the first active material particles and the second active material particles of Example 6 as shown in Table 3 below.

**[Table 3]**

| particle No. | first primary particle (N+10) | | | second primary particle (N) | | |
|---|---|---|---|---|---|---|
| | major axis (µm) | minor axis (µm) | aspect ratio | major axis (µm) | minor axis (µm) | aspect ratio |
| 1 | 1,484 | 186 | 8.0 | 487 | 380 | 1.3 |
| 2 | 1,484 | 286 | 5.2 | 468 | 381 | 1.2 |
| 3 | 1,417 | 222 | 6.4 | 375 | 282 | 1.3 |
| 4 | 1,497 | 213 | 7.0 | 420 | 287 | 1.5 |
| 5 | 1,499 | 185 | 8.1 | 475 | 322 | 1.5 |
| average | 1,476.2 | 218.4 | 6.9 | 445 | 330 | 1.4 |

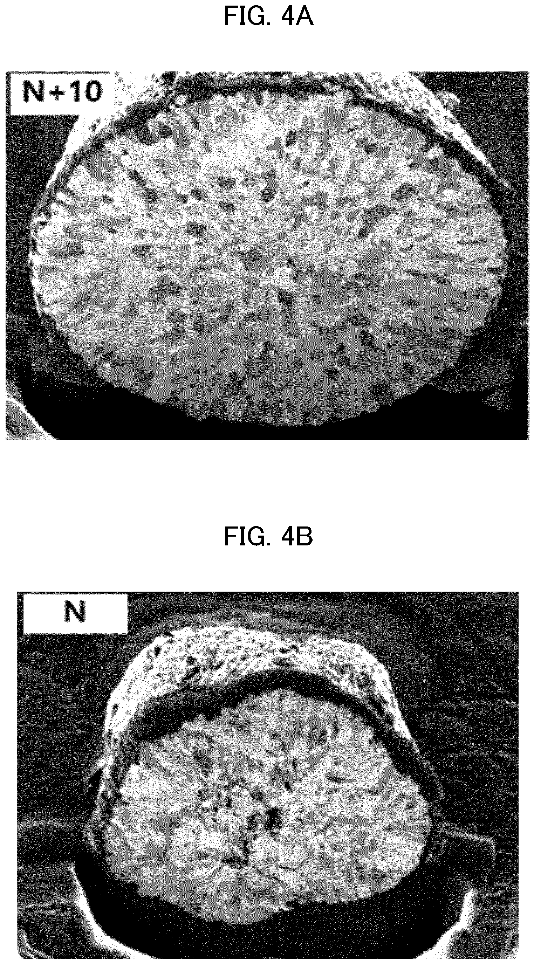

FIGS. 4A and 4B are scanning electron microscope (SEM) images of a first active material particle (designated as N+10) and a second active material particle (designated as N) of Comparative Example 3, respectively.

The aspect ratio was calculated from the five primary particles selected from the first active material particles and the second active material particles of Comparative Example 3 as shown in Table 4 below.

**[Table 4]**

| particle No. | first primary particle (N+10) | | | second primary particle (N) | | |
|---|---|---|---|---|---|---|
| | major axis (µm) | minor axis (µm) | aspect ratio | major axis (µm) | minor axis (µm) | aspect ratio |
| 1 | 865 | 465 | 1.9 | 116 | 50 | 2.4 |
| 2 | 730 | 431 | 1.7 | 156 | 71 | 2.2 |
| 3 | 889 | 441 | 2.0 | 144 | 64 | 2.3 |
| 4 | 749 | 550 | 1.5 | 112 | 55 | 2.1 |
| 5 | 742 | 441 | 1.7 | 140 | 60 | 2.3 |
| average | 795 | 456 | 1.7 | 134 | 60 | 2.2 |

### Experimental Example

### (1) Measurement of initial capacity and capacity retention

For the lithium secondary batteries according to Examples and Comparative Examples, charging (CC/CV 0.5C 4.3V 0.05C CUT-OFF) and discharging (CC 0.5C 3.0V CUT-OFF) were repeated for 500 cycles at 41°C. A discharge capacity at the first cycle was measured as an initial discharge capacity. A capacity retention rate was evaluated by a ratio (percentage) of a discharge capacity at the SOOth cycles to the initial discharge capacity.

### (2) Measurement of electrode thickness

A cathode thickness after the above-described formation discharge and a cathode thickness after the 500 cycles of charging/discharging performed in the above (1) were each measured. The cathode thickness was measured using a flat plate thickness measuring device (Mitutoyo, 543-490B).

### (3) Measurement of electrode BET

A cathode BET after the above-described formation discharge and a cathode BET after the 500 cycles of charging/discharging performed in the above (1) were each measured. Specifically, the cathodes were cut so that a weight of the cathode from which a weight of the cathode current collector was subtracted (i.e., a weight of the cathode active material layer) was in a range from about 1.5 g to 1.7 g to from samples, and then a BET value was measured for each sample. The BET value was measured according to a gas adsorption and desorption method using a BET measurement device (ASAP2420, Micrometrics Co., Ltd.).

The evaluation results are shown in Table 5 below.

**[Table 5]**

| | electrode thickness (µm) | | electrode BET(m²/g) | | | 41°C evaluation | |
|---|---|---|---|---|---|---|---|
| | formation | 500 cycles | formation | 500 cycles | changed amount | initial discharge capacity (mAh/g) | capacity retention (500 cycles)(%) |
| Example 1 | 66 | 68 | 1.92 | 2.59 | 0.67 | 199 | 92 |
| Example 2 | 65 | 68 | 1.93 | 2.74 | 0.81 | 201 | 90 |
| Example 3 | 64 | 67 | 1.96 | 2.78 | 0.82 | 216 | 89 |
| Example 4 | 65 | 68 | 1.95 | 2.83 | 0.88 | 215 | 90 |
| Example 5 | 65 | 69 | 1.96 | 2.90 | 0.94 | 216 | 87 |
| Example 6 | 64 | 69 | 1.95 | 3.00 | 1.05 | 217 | 86 |
| Example 7 | 63 | 68 | 2.01 | 3.16 | 1.15 | 221 | 86 |
| Example 8 | 64 | 68 | 1.99 | 2.99 | 1.00 | 219 | 88 |
| Example 9 | 63 | 69 | 2.03 | 3.25 | 1.22 | 223 | 84 |
| Example 10 | 63 | 67 | 1.99 | 2.94 | 0.95 | 219 | 88 |
| Comparative Example 1 | 64 | 66 | 1.98 | 2.28 | 0.30 | 210 | 78 |
| Comparative Example 2 | 65 | 71 | 2.05 | 3.68 | 1.64 | 200 | 79 |
| Comparative Example 3 | 65 | 71 | 2.01 | 3.58 | 1.57 | 200 | 81 |
| Comparative Example 4 | 65 | 70 | 1.95 | 2.73 | 0.78 | 215 | 73 |

Referring to Table 5, in Examples where the aspect ratios of the first primary particle included in the first active material particle and the second primary particle included in the second active material particle were adjusted to desirable ranges according to the above-described embodiments, increase of the electrode thickness and the BET value were remarkably suppressed during repeated charging/discharging. Additionally, the enhanced capacity retentions was achieved compared to those from Comparative Examples.

The first and second primary particles of Comparative Example 4 satisfied with the above-described aspect ratio range, but the capacity retention was explicitly reduced as the cobalt ratio increased.

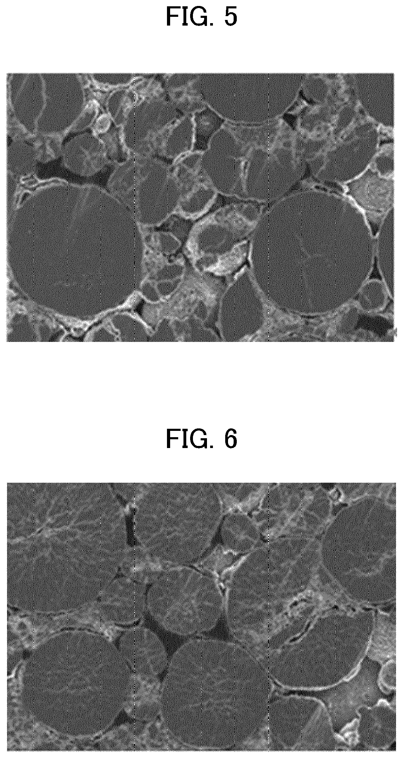

FIG. 5 is an SEM image of a cross-section of a cathode active material layer according to Example 6. FIG. 6 is an SEM image of a cross-section of a cathode active material layer according to Comparative Example 3. Specifically, FIGS. 5 and 6 are cross-sectional SEM images of cathode active material layers after repeating 500 cycles of charging/discharging at 41°C under the above-described conditions.

Referring to FIG. 5 and FIG. 6, generation of cracks in the active material particles in the cathode active material layer of Comparative Example 3 was explicitly increased.

The disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing battery-based energy storage systems (ESSs) to store renewable energy such as solar power and wind power.

## Claims

1. A cathode active material for a lithium secondary battery, comprising:
a first active material particle having a secondary particle structure that includes first primary particles that are agglomerated or aggregated; and
a second active material particle having a secondary particle structure that includes second primary particles that are agglomerated or aggregated, wherein a particle diameter of the second active material particle is smaller than a particle diameter of the first active material particle, and an aspect ratio of the second primary particles is smaller than an aspect ratio of the first primary particles,
wherein each of the first active material particle and the second active material particle includes a lithium-nickel-cobalt-based metal oxide, and a mass ratio of cobalt to an active metal excluding lithium, nickel and cobalt in the lithium-nickel-cobalt-based metal oxide is in a range from 0.7 to 2.0, and
wherein the active metal includes at least one of Mn, Al, Ti, V, Zr, Nb, Sb, or Ta.

2. The cathode active material of claim 1, wherein the aspect ratio of the first primary particles is in a range from 2 to 10.

3. The cathode active material of any one of claims 1 and 2, wherein the aspect ratio of the first primary particles is in a range from 2.5 to 9.5.

4. The cathode active material of any one of claims 1 to 3, wherein the aspect ratio of the second primary particles is in a range from 1 to 1.9.

5. The cathode active material of any one of claims 1 to 4, wherein the aspect ratio of the second primary particles is in a range from 1 to 1.8.

6. The cathode active material of any one of claims 1 to 5, wherein the active metal includes Mn, and a molar ratio of Co relative to Mn in the lithium-nickel-cobalt-based metal oxide is in a range from 0.6 to 1.5.

7. The cathode active material of any one of claims 1 to 6, wherein a mole fraction of nickel relative to total moles of metals except for lithium in the lithium-nickel-cobalt-based metal oxide is 0.8 or more.

8. The cathode active material of any one of claims 1 to 7, wherein the lithium-nickel-cobalt-based metal oxide includes a layered structure or a chemical structure represented by Chemical Formula 1:
[Chemical Formula 1] LiₐNiₓCo_{y}M1_{z}M2_{w}O₂
wherein, in Chemical Formula 1, 0.95≤a≤1.2, 0.8≤x≤0.98, 0<y≤0.3, 0<z≤0.3, 0≤w≤0.1, M1 represents the active metal, and M2 represents a heterogeneous element different from Ni, Co and M1.

9. The cathode active material of claim 8, wherein, in Chemica Formula 1, M2 includes at least one of B, Ca, W, Mg, Na, Y, Hf, Ba, Ra, Sr, Sn, Ru, Fe, Zn, Cr, Ga, V, or Bi.

10. The cathode active material of any one of claims 1 to 9, wherein a difference between particle diameters of the first active material particle and the second active material particle is 10 µm or more.

11. The cathode active material of claim 10, wherein the particle diameter of the first active material particle is in a range from 11 µm to 25 µm.

12. The cathode material of claim 10, wherein the particle diameter of the second active material particle is in a range from 0.5 µm to 5 µm.

13. A lithium secondary battery, comprising:
a cathode comprising the cathode active material for a lithium secondary battery according to any one of claims 1 to 12; and
an anode facing the cathode.
